Europäisches Patentamt

European Patent Office

Office européen des brevets

⑩

(11) Publication number: **0 127 475**
**B1**

(12) **EUROPEAN PATENT SPECIFICATION**

(45) Date of publication of patent specification: **26.04.89**

(21) Application number: **84303580.9**

(22) Date of filing: **25.05.84**

(51) Int. Cl.⁴: **H 01 J 61/34**

(54) Double ended compact fluorescent lamp.

(30) Priority: **27.05.83 US 499010**

(43) Date of publication of application: .
**05.12.84 Bulletin 84/49**

(45) Publication of the grant of the patent:
**26.04.89 Bulletin 89/17**

(84) Designated Contracting States:
**BE DE FR GB IT NL**

(56) References cited:
**EP-A-0 066 783**
**DE-A-3 311 457**
**FR-A-1 060 766**
**JP-A-57 044 958**
**US-A-4 288 239**

**PATENT ABSTRACTS OF JAPAN, unexamined applications, E section, vol. 6, no. 136, July 23, 1982, THE PATENT OFFICE JAPANESE GOVERNMENT, p. 70 E 120**

(73) Proprietor: **GTE Products Corporation**
**100 West 10th Street**
**Wilmington, DE 19801 (US)**

(72) Inventor: **Thibault, PAul A.**
**7, Loris Road**
**Danvers Massachusetts 01923 (US)**
Inventor: **Maya, Jakob**
**23, Manchester Street**
**Brookline Massachusetts 02146 (US)**

(74) Representative: **Bubb, Antony John Allen et al**
**GEE & CO. Chancery House Chancery Lane**
**London WC2A 1QU (GB)**

## Description

This invention relates to fluorescent lamps and more particularly to compact version of such lamps.

Fluorescent lamps are known light sources valued for their relatively low cost, long life, and high efficacy (light out per unit of power consumption, usually expressed as lumens per watt; i.e. LPW). Such lamps generally comprise an elongated, hermetically sealed, glass tube containing an electrode at either end and a quantity of mercury and a starting gas, e.g. argon. The inside surface of the tube is coated with a phosphor which transduces ultraviolet radiation into visible light. The ultraviolet radiation is derived from the mercury arc produced between the electrodes when the lamp is operating.

Since the efficacy of fluorescent lamps (other things being equal) is a function of the arc length, i.e. lumens per watt, ratings of long arc length lamps are greater than the LPW ratings of short arc length lamps, it is important to provide as long an arc length as possible within a small volume to produce an efficient lamp.

Much effort has been devoted to this end in an attempt to provide a single ended fluorescent lamp suitable as a replacement for incandescent types. See, for example, U.S. Patent Nos. 4,288,239; 4,191,907; 4,142,125; 4,347,460; and EP—A—121427, EP—A—121428 and EP—A—121429.

JP—A—57-61 253 discloses a single ended fluorescent lamp having the features of the precharacterising clause of Claim 1.

In addition, JP—A—57-44 958 discloses a similar arrangement in which U-shaped tubes are used instead of providing arc directors at one end of the assembly of tubes. The latter document also describes an arrangement in which the tubes are part of a self-supporting unit that is located relatively to the outer envelope, at one end transversely by engagement within the envelope and at the other longitudinally by resilient means attached to the unit.

However, it would be an advance in the art to provide a double ended fluorescent lamp having an arc length greater than the linear length of the envelope.

In accordance with the invention this object is achieved by means of the characterising features of Claim 1.

There is thus provided a double ended lamp having a long arc length within a much shorter linear distance. It is simple and economical to build and allows the efficacy of fluorescent technology to be employed in places where it would otherwise be inconvenient.

The invention is illustrated by way of example in the accompanying drawings in which;

Fig. 1 is an exploded, perspective view of an embodiment of the invention; and

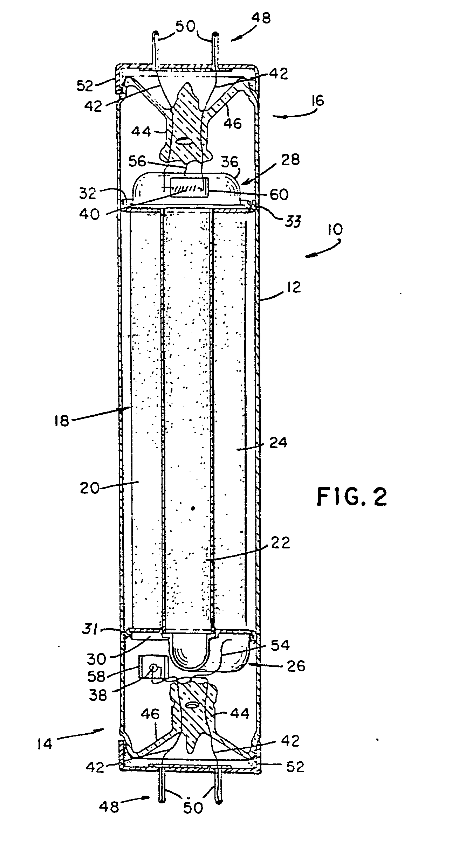

Fig. 2 is a longitudinal sectional view thereof.

Best mode for carrying out the invention

For a better understanding of the present invention, together with other and further objects, advantages and capabilities thereof, reference is made to the following disclosure and appended claims taken in conjunction with the above-described drawings.

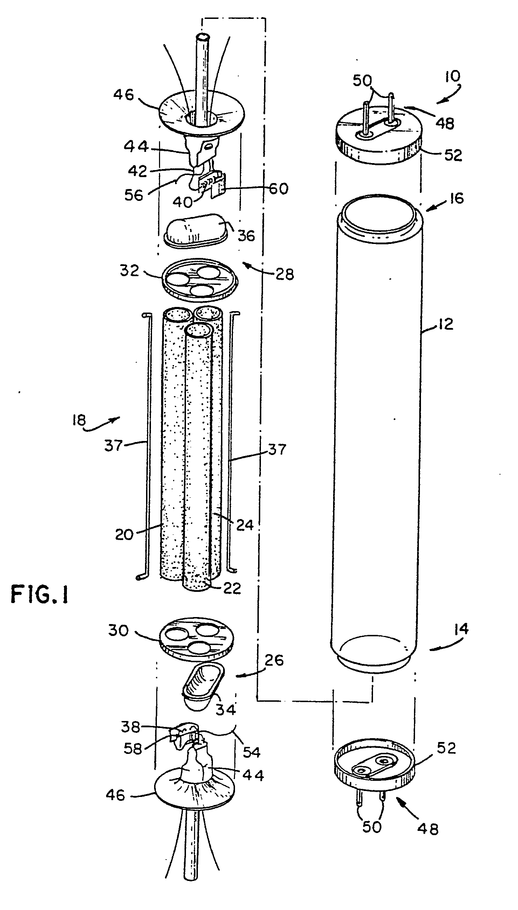

Referring now to the drawings with greater particularity, there is shown in Fig. 1 a compact fluorescent lamp 10 having an outer, light-transmissive, glass envelope 12 having a given diameter, say 38 mm (1 1/2 inches), and a first end 14 and a second end 16, the ends being opposed to one another.

As assembly 18 is positioned within envelope 12 and comprises a plurality of phosphor coated tubes 20, 22 and 24 each having a diameter less than the diameter of envelope 12. In a preferred embodiment this latter diameter can be 16 mm (5/8 inches).

A first arc directing means 26 is associated with one end of the tubes and a second arc directing means 28 is associated with the second ends of the tubes. The arc directing means 26 and 28 comprise, respectively, base members 30 and 32 each provided with apertures for receiving the tubes, and arc directors 34 and 36, each in the form of a rectangular dish. The arc directing means 26 and 28 can take various forms and be formed of various materials. Suitable embodiments are shown in the above-mentioned applications EP—A—121 427, EP—A—121 428 and EP—A—121 429, and the teachings therein are herein incorporated by reference. Rods 37 are affixed to and extend between the base members to hold the assembly together.

A first electrode 38 is located in first end 14 of lamp 10 at a first end of the arc path and a second electrode 40 is located in second end 16 at a second end of the arc path. The electrodes 38 and 40 can be conventional fluorescent lamp electrodes which can be supported between lead-in wires 42 which are held within a press 44 of flares 46.

Envelope 12, which is hermetically sealed, contains an arc generating and sustaining atmosphere of, e.g., about 20 mg of mercury and argon at a pressure of about 0.004 Bar (3 torr). This atmosphere also permeates the tubes 20, 22 and 24. The interiors of tubes 20, 22 and 24 are coated with a suitable phosphor.

Electrical connection means 48 are provided for making electrical connection to the electrodes 38 and 40 and can be in the form of pins 50 in bases 52, as is conventional.

First and second assembly positioning means 54 and 56 are associated with the ends of the outer envelope 12 and can comprise spring wires having one end affixed in the press and the free end thereof in contact with an arc directing means to center the assembly 18 longitudinally within envelope 12 and align the same with respect to the electrodes.

In a preferred embodiment of the invention the electrodes 38 and 40 can be at least partially surrounded by a disintegration shield 58 and 60 respectively. Further, each of the disintegration shields can have a getter mounted thereon.

While the electrodes 38 and 40 can be mounted within the ends of the tubes, this condition is not necessary and, in the preferred embodiment, the electrodes are positioned outside the tubes as shown in the drawings.

When this latter condition obtains, it is necessary that the edges 31 and 33 of base members 30 and 32 fit tightly against the inside surface of envelope 12 to prevent the arc from operating directly between electrodes 38 and 40.

In operation the necessary arc will originate at one electrode, say 38, and progress up tube 20, across arc director 36, down tube 24, across arc director 34 and up tube 22 to terminate at electrode 40. It is to be understood that the terms "up", "down" and "across" refer to directions corresponding to the drawings as normally viewed, and that these terms will vary depending upon the orientation of the lamp 10.

There is thus provided a double-ended fluorescent lamp having a long arc length in a relatively short linear length. All of the components of the lamp can be fabricated from readily available materials, thus avoiding the use of complex and custom made partitions, baffles, etc., and greatly reducing the cost. The employment of the straight tubes and arc directors, which receive the tubes in an arc tight but atmosphere permeable manner, eliminates difficult tube bending operations and multiple hermetic seals, thus further reducing the cost. Since each of the internal tubes is a separate entity, it is also possible to vary the light output of the lamp by coating each tube with a different phosphor.

While there have been shown and described what are at present considered to be the preferred embodiments of the invention, it will be apparent to those skilled in the art that various changes and modifications can be made herein without departing from the scope of the invention as defined by the appended claims.

## Claims

1. A fluorescent lamp (10) comprising an outer envelope (12) having a given diameter and an assembly (18) within said envelope (12) comprising a plurality of phosphor coated tubes (20, 22, 24) each having a diameter less than said given diameter and arc directing means (26, 28) associated with ends of said tubes (20, 22, 24) to form a continuous arc path therethrough; a pair of electrodes (38, 40) associated with respective ends of said arc path; an arc generating and sustaining atmosphere within said outer envelope (12) and said tubes (20, 22, 24); and electrical connection means (48) extending through said outer envelope (12) to make electrical connection to said electrodes (38, 40), characterised in that said plurality of phosphor coated tubes (20, 22, 24) comprises an odd number of tubes such that said arc path terminates adjacent opposite ends of said envelope (12); that said lamp is correspondingly a double ended lamp with said electrodes (38, 40) mounted to said opposite ends of said envelope (12) and located outside the said phosphor coated tubes (20, 22, 24) in a space defined between said outer envelope (12) and a corresponding end of the unit, that said assembly of tubes (20, 22, 24) and said arc directing means (26, 28) forms independently of said outer envelope, a self-supporting mechanical unit opposite ends of which engage within and are located by said outer envelope (12) in the transverse direction; and that said unit is positioned in the longitudinal direction by spring wires (54, 56) respectively at said opposite ends of said envelope (12) each spring wire (54, 56) being fixed in said outer envelope (12) and extending into engagement with said unit.

2. A lamp (10) as claimed in Claim 1, characterised in that each said spring wire (54, 56) is of sinuous configuration and has one end sealed into the outer envelope (12) substantially at the central axis thereof and the other end engaging said unit at a point radially spaced from said central axis.

3. A lamp (10) as claimed in Claim 2, characterised in that said arc directing means (26, 28) and said spring wires (54, 56) are so shaped to engage one another that the spring wires maintain the angular alignment of the said unit (18) within the outer envelope and with respect to said electrodes.

4. A lamp as claimed in any one of Claims 1—3 characterised in that said electrodes are mounted between lead-in wire supports, said supports being sealed into and projecting outside of said ends.

5. A lamp as claimed in any one of Claims 1—4 characterised in that said electrodes are at least partially surrounded by a disintegration shield.

6. A lamp as claimed in Claim 5 characterised in that said disintegration shield mounts a getter.

7. A lamp as claimed in any one of Claims 1 to 6, characterised in that said arc directing means each comprises a base member (30, 32) having an edge (31, 33) engaging said outer envelope, said base members forming mountings for arc directors (34, 36) attached thereto and having apertures engaging said tubes (20, 22, 24), and said assembly of arc directors and tubes is secured together to form said mechanical unit by means of rods (37) affixed to and extending between said base members (30, 32).

## Patentansprüche

1. Leuchtstofflampe (10) mit einer äußeren Hülle (12) vorgegebenen Durchmessers und einer Baugruppe (18) innerhalb der Hülle (12), die aus einer Mehrzahl von mit Leuchtstoff beschichteten Röhren (20, 22, 24) besteht, von denen jede einen Durchmesser aufweist, der geringer ist als ein vorgegebener Durchmesser, sowie Bogenführungselemente (26, 28), die mit den Enden der Röhren (20, 22, 24) in Verbindung stehen, um einen kontinuierlichen Bogenweg durch dieselben zu bilden; mit einem Elektrodenpaar (38, 40), das den jeweiligen Enden des Bogenwegs zugeordnet ist; mit einer einen Bogen erzeugenden und erhaltenden Atmosphäre innerhalb der äußeren Hülle (12) und der Röhren (20, 22, 24); und mit elektrischen Verbindungselementen (48), die sich durch die äußere Hülle (12) erstrecken und für elektrische Verbindung mit den Elektroden (38, 40) sorgen, dadurch gekennzeichnet, daß die Mehrzahl von leuchtstoffbeschichteten Röhren (20, 22, 24) eine ungerade Röhrenanzahl umfaßt, derart, daß der Bogenweg jeweils nahe den einander gegenüberliegenden Enden der Hülle (12) endet; daß die Lampe dementsprechend eine Lampe mit zwei Enden ist, wobei die Elektroden (38, 40) an den einander gegenüberliegenden Enden der Hülle (12) montiert und außerhalb der leuchstoffbeschichteten Röhren (20, 22, 24) in einem definierten Raum zwischen der äußeren Hülle (12) und einem entsprechenden Ende der Einheit angeordnet sind, daß die Baugruppe aus Röhren (20, 22, 24) und die Bogenführungselemente (26, 28) unabhängig von der äußeren Hülle eine selbsttragende mechanische Einheit bildet, deren einander gegenüberliegende Enden innerhalb der äußeren Hülle (12) gehalten und von dieser in Querrichtung fixiert sind; und daß die Einheit in Längsrichtung von Drahtfedern (54, 56) jeweils an den einander gegenüberliegenden Enden der Hülle (12) positioniert ist, wobei jede Drahtfeder (54, 56) in der äußeren Hülle (12) befestigt ist und sich in Eingriff mit der Einheit erstreckt.

2. Lampe (10) nach Anspruch 1, dadurch gekennzeichnet, daß jede Drahtfeder (54, 56) sinusförmige Gestalt aufweist und mit einem Ende in die äußere Hülle (12) im wesentlichen an der Mittelachse derselben eingesiegelt ist, während das andere Ende der Feder an einem Punkt der Einheit angreift, der radial in Abstand von der Mittelachse angeordnet ist.

3. Lampe (10) nach Anspruch 2, dadurch gekennzeichnet, daß die Bogenführungselemente (26, 28) und die Drahtfedern (54, 56) derart zum Eingriff aneinander geformt sind, daß die Drahtfedern die winkelmäßige Ausrichtung der Einheit (18) innerhalb der äußeren Hülle und mit Bezug auf die Elektroden aufrechterhalten.

4. Lampe nach irgendeinem der Ansprüche 1 bis 3, dadurch gekennzeichnet, daß die Elektroden zwischen Halterungen aus Zuführungsdrähten montiert sind, welche Halterungen in die Enden eingesiegelt sind und außerhalb derselben vorstehen.

5. Lampe nach irgendeinem der Ansprüche 1 bis 4, dadurch gekennzeichnet, daß die Elektroden zumindest teilweise von einem Desintegrationsschild umgeben sind.

6. Lampe nach Anspruch 5, dadurch gekennzeichnet, daß der Desintegrationsschild einem Getter als Halterung dient.

7. Lampe nach irgendeinem der Ansprüche 1 bis 6, dadurch gekennzeichnet, daß die Bogenführungselemente jeweils aus einem Basiselement (30, 32) bestehen, das einen an der äußeren Hülle angreifenden Rand (31, 33) aufweist, wobei die Basiselemente Halterungen für Bogenführungen (34, 36) bilden, die an ihnen angeordnet sind und Öffnungen besitzen, die mit den Röhren (20, 22, 24) in Eingriff stehen, und daß die Baugruppe aus Bogenführungen und Röhren mittels Stäben (37), die sich zu und zwischen den Basiselementen (30, 32) erstrecken, fest miteinander verbunden sind, um die mechanische Einheit zu bilden.

**Revendications**

1. Lampe fluorescente (10) comportant une ampoule extérieure (12) présentant un diamètre donné et un ensemble (18) à l'intérieur de la dite ampoule (12) comprenant une pluralité de tubes (20, 22, 24) recouverts de luminophores présentant chacun un diamètre inférieur au dit diamètre donné et des moyens (26, 28) dirigeant l'arc associés aux extrémités des dits tubes (20, 22, 24) pour former un chemin continu pour l'arc à travers ces derniers; deux électrodes (38, 40) associées aux extrémités respectives du dit chemin d'arc; un gaz générant et favorisant l'arc à l'intérieur de la dite ampoule extérieure (12) et des dits tubes (20, 22, 24); et des moyens de connexion électrique (48) traversant la dite ampoule extérieure (12) pour réaliser la connexion électrique des dites électrodes (38, 40), caractérisée en ce que la dite pluralité de tubes (20, 22, 24) recouverts de luminophores comprend un nombre impair de tubes de telle manière que le dit chemin d'arc finisse au voisinage des extrémités opposées de la dite ampoule (12); que la dite lampe est de façon correspondante une lampe à deux extrémités opposées dans lesquelles sont montées les dites électrodes (38, 40) et logée au-dehors des dits tubes (20, 22, 24) recouverts de luminophores dans un espace défini entre la dite ampoule extérieure (12) et une extrémité correspondante de l'unité; que la dite pluralité de tubes (20, 22, 24) et les dits moyens dirigeant l'arc (26, 28) constituent indépendamment de la dite ampoule extérieure une unité d'auto-support mécanique dont les extrémités opposées sont disposées et s'engagent à l'intérieur de la dite ampoule extérieure (12) en direction transversale; et que la dite unité est maintenue en direction longitudinale au moyen de fils formant ressort (54, 56) respectivement aux dites extrémités opposées de la dite ampoule (12), chaque fil formant ressort (54, 56) étant fixé à l'intérieur de la dite ampoule extérieure (12) et étant en contact avec la dite unité.

2. Lampe selon la revendication 1 caractérisée en ce que chaque fil formant ressort (54, 56) a une configuration sinueuse et a une extrémité scellée dans l'ampoule extérieure (12) substantiellement dans l'axe central de celle-ci, et l'autre extrémité en contact avec la dite unité en un point radialement espacé dudit axe central.

3. Lampe selon la revendication 2 caractérisée en ce que les dits moyens (26, 28) dirigeant l'arc et les dits fils formant ressort (54, 56) sont conformés de manière à être en contact ensemble pour que les fils formant ressort maintiennent l'alignement angulaire de la dite unité (18) à l'intérieur de l'ampoule extérieure par rapport aux dites électrodes.

4. Lampe selon l'une quelconque des revendications 1 à 3 caractérisée en ce que les dites électrodes sont disposées entre les entrées de courant, ces dernières étant scellées à l'intérieur et faisant saillie des dites extrémités.

5. Lampe selon l'une quelconque des revendications 1 à 4 caractérisée en ce que les dites électrodes sont au moins partiellement entourées par un écran de désintégration.

6. Lampe selon la revendication 5 caractérisée en ce que le dit écran de désintégration comporte un getter.

7. Lampe selon l'une quelconque des revendications 1 à 6 caractérisée en ce que les dits moyens dirigeant l'arc comprennent chacun une base (30, 32) comportant un bord (31, 33) en contact avec la dite ampoule extérieure, les dites bases constituant des supports pour les directeurs (34, 36) d'arc auxquelles ils sont fixés et présentant des ouvertures au contact des dits tubes (20, 24, 26), et que l'ensemble des dits directeurs d'arc et les dits tubes sont fixés ensemble pour constituer la dite unité mécanique au moyen de tiges (37) fixées à et faisant saillie des dites bases (30, 32).

FIG.1

FIG. 2